# EUROPEAN PATENT APPLICATION

(11) **EP 4 571 789 A1**
(43) Date of publication of application: **18.06.2025**
(21) Application number: 23215963.2
(22) Date of filing: 12.12.2023
(51) Int. Cl.: H01B 7/282, H01B 3/00

(54) **A SUBMARINE POWER CABLE**

(71) Applicant: NKT HV Cables AB, 371 60 Lyckeby (SE)
(72) Inventor: TORVALDSSON, Henrik, Karlskrona (SE); ARNSTEN, Sara, Västerås (SE); IBN YAICH, Anas, Västerås (SE); JOHANSSON, Kenneth, Täby (SE)
(74) Representative: Kransell & Wennborg KB

(57) **Abstract**

A submarine power cable (1, 101, 201) comprising: a conductor (2); an insulation system (5) including at least a first semiconducting layer (3) provided around the conductor (2), and an insulation layer (4) provided around the first semiconducting layer (3); a water barrier layer (7, 107, 207) surrounding the insulation system (5). The water barrier layer (7, 107, 207) is obtained from a composition comprising a base polymer in an amount of at least 50 wt% and an additive being graphene, graphene or graphite nanoplatelets, graphene oxide, reduced graphene oxide and/or graphite in an amount of between 0.05 wt% and 10 wt%, preferably between 0.25 wt% and 6 wt %, more preferably between 0.5 wt% and 2 wt%, based on the weight of the composition.

## Description

### TECHNICAL FIELD

The present disclosure generally relates to a submarine power cables.

### BACKGROUND

Submarine power cables are installed in marine environments. They may for example be arranged on the seabed, be buried under the seabed, or rise from the seabed to an offshore platform. Submarine power cables are configured specifically for use in marine environments to protect them from for example water ingress, from damage from external marine objects such as anchors, and from fatigue damage due to wave motion. They may also be constructed to withstand large tensional forces during installation at larger depths.

Submarine power cables typically comprise one or more power cores. Each power core may comprise a conductor and an insulation system insulating the conductor. Further, each power core may generally have a water-blocking layer or water-barrier layer to protect the insulation system from water ingress. Traditionally, the water-blocking layer is formed by a lead or lead-alloy layer. Lead is problematic for several reasons and the extraction, production, use, and disposal of lead and its products may lead to significant contamination in soils and waters.

### SUMMARY

A general object of the present disclosure is to provide a submarine power cable that solves or at least mitigates the problems of the prior art.

According to a first aspect, there is hence provided a submarine power cable comprising: a conductor; an insulation system including at least a first semiconducting layer provided around the conductor, and an insulation layer provided around the first semiconducting layer; a water barrier layer surrounding the insulation system; wherein the water barrier layer is obtained from a composition comprising a base polymer in an amount of at least 50 wt% and an additive being graphene, graphene or graphite nanoplatelets, graphene oxide, reduced graphene oxide and/or graphite in an amount of between 0.05 wt% and 10 wt%, preferably between 0.25 wt% and 6 wt %, more preferably between 0.5 wt% and 2 wt%, based on the weight of the composition.

Hereby, an advantageous water barrier layer is provided. Owing to the composition, and in particular the choice and amount of the additive, a water barrier layer having a low water permeability while providing other desired characteristics such as electrical conductivity is achieved. Moreover, such water barrier layer can be made less complex, and/or less costly, compared to prior art solutions using e.g. a lead-based metallic sheath as the water barrier layer. Moreover, by the first aspect, the electrical, mechanical and chemical requirements of a submarine cable can be met in an advantageous manner owing to the composition of the water barrier layer. In particular, by providing an additive being graphene, graphene or graphite nanoplatelets, graphene oxide, reduced graphene oxide and/or graphite, the characteristics of the water barrier layer, such as the electrical properties thereof, can be adapted in an advantageous manner. Moreover, as the composition comprises at least 50 wt% of the base polymer, the characteristics of the water barrier layer, such as the water permeability, can be beneficially controlled, e.g. by using additional components such as filler materials. The more precise characteristics of the water barrier layer may be adapted as desired by varying the amount of such additional components and/or of the additive, e.g. by increasing the amount of additive to increase the electrical conductivity.

It should be understood that the composition of the water barrier layer comprises at least 50 wt% of the base polymer, and between 0.05 wt% and 10 wt%, preferably between 0.25 wt% and 6 wt %, more preferably between 0.5 wt% and 2 wt%, of the additive, wherein the weight percentage, wt%, is based on the total weight of the composition. The water barrier layer may comprise more than 50 wt% of the base polymer, e.g. at least 70 wt% or at least 90 wt%. Additionally or alternatively, the composition comprises between 0.5 wt% and 10 wt%, or between 0.5 wt% and 6 wt %, or between 0.5 wt% and 1.1 wt%, of the additive.

According to one embodiment, the water barrier layer is in direct contact with the insulation system. Hereby, the water barrier layer can prevent, or at least greatly reduce, water penetrating into the insulation system from the outside. For example the water barrier layer is arranged radially outside of, and in direct contact with, the insulation system. The water barrier layer may e.g. be extruded, axially lapped or radially lapped around the insulation system.

According to one embodiment, the water barrier layer has a water permeability of below 0.05 g / (m²*24 h) (or 0.05 g / (m²*day)). Hereby, the amount of water penetrating into the insulation system from the outside can be kept low. It should be understood that a water permeability of below 0.05 g / (m²*24 h) is reached by the above described composition of the water barrier layer. That is, by providing a composition for the water barrier layer wherein the composition comprises a base polymer in an amount of at least 50 wt% and an additive being graphene, graphene or graphite nanoplatelets, graphene oxide, reduced graphene oxide and/or graphite in an amount of between 0.05 wt% and 10 wt%, preferably between 0.25 wt% and 6 wt %, more preferably between 0.5 wt% and 2 wt%, a water permeability of below 0.05 g / (m²*24 h) for the water barrier layer can be achieved. According to one embodiment, the water barrier layer has a water permeability of below 0.01 g / (m²*24 h) (or 0.01 g / (m²*day)) or below 0.001 g / (m²*24 h) (or 0.001 g / (m²*day)) or below 0.0001 g / (m²*24 h) (or 0.0001 g / (m²*day)).

The water permeability may be determined as the water vapor transmission rate, WVTR, according to ISO 15106-1. The WVTR may be determined at a temperature of 40°C and 100% relative humidity (RH).

According to one embodiment, the composition of the water barrier layer further comprise at least one of the following additional components: an antioxidant, a stabilizer, a plasticizer, carbon black, a filler material, slip additives, crosslinking agents, pigments, compatibilizers, dispensing agents. For example, the composition comprises at least 1 wt% antioxidant, 2 wt% of the additive and at least 95 wt% of the base polymer, the base polymer being e.g. HDPE.

According to one embodiment, the additive of graphene, graphene or graphite nanoplatelets, graphene oxide, reduced graphene oxide and/or graphite is mixed with particles from at least one of the following: carbon black, a layered silicate, a clay, a silica-based compound, a zeolite.

According to one embodiment, the additive is a two-dimensional (2D) carbon based material. 2D carbon based material are sheet-like carbon-containing materials. The additive may e.g. be a two-dimensional carbon-based nanomaterial (2D nanomaterials) forming atomically thick nanomaterials that consist of a single to few layers of atoms. According to one embodiment, the additive is at least one of, or a mixture of at least two of, the following: graphene, graphene or graphite nanoplatelets, graphene oxide, reduced graphene oxide and graphite.

For example, the additive is mixture of graphene and graphene oxide, e.g. at a graphene-graphene oxide ratio of 0.5-1.5. For example, for an additive amount of 0.05 wt%, the additive maybe 0.025 wt % of graphene and 0.025 wt % of reduced graphene oxide.

According to one embodiment, the base polymer of the composition of the water barrier layer is a thermoplastic polymer. Hereby, the water barrier layer may have thermoplastic properties.

According to one embodiment, the base polymer of the composition of the water barrier layer is HDPE, MDPE, LDPE, LLDPE or PP. The base polymer of the composition may be a mixture of at least two of HDPE, MDPE, LDPE, LLDPE and PP. Additionally or alternatively, the base polymer comprises a cyclic olefin copolymer, COC. Additionally or alternatively, the base polymer of the composition is an engineered thermoplastics such as e.g. PVdC, PCTFE, LCP. According to one embodiment, the base polymer of the composition of the water barrier layer is a thermosetting polymer, such as XLPE, or crosslinked polyethylene.

According to one embodiment, the additive of the composition is in the form of composites or nanocomposites and/or particles or nanoparticles. Hereby, the additive can be distributed in the composition and the resulting water barrier layer in an advantageous manner. For example, the electrical properties, coefficient of friction (COF) and/or the thermal conductivity of the water barrier layer can be improved.

According to one embodiment, the submarine power cable further comprises a polymeric jacket provided around the insulation system. The polymeric jacket may e.g. comprise a polymeric material that is extruded around the insulation system and/or the water barrier layer, or it may comprise polymeric tape laid around a longitudinal axis of, or radially applied in a helix around, the submarine power cable. The polymeric jacket may be wholly or partly water permeable.

According to one embodiment, the water barrier layer is arranged in between the insulation system and the polymeric jacket, or the polymeric jacket forms the water barrier layer. Thus, the polymeric jacket may form the water barrier layer and be obtained from the previously described composition.

According to one embodiment, the submarine power cable further comprises a second semiconducting layer. For example, the first semiconducting layer may be an inner semiconducting layer arranged in direct contact with, and radially inside of, the insulation layer, and the second semiconducting layer may be an outer semiconducting layer arranged radially outside of the insulation layer.

According to one embodiment, the second semiconducting layer is comprised in the insulation system. The second semiconducting layer may be arranged in direct contact with, and radially outside of, the insulation layer. The second semiconducting layer may form an insulation screen. The first semiconducting layer may form a semiconducting conductor shield. The first semiconducting layer may be arranged closest to the conductor (i.e. closest with regards to the insulation system).

According to one embodiment, the second semiconducting layer forms the water barrier layer. Thus, the second semiconducting layer may form the water barrier layer and be obtained from the previously described composition. In other words, the water barrier layer may be semiconductive.

According to one embodiment, the submarine power cable does not comprise a metallic sheath of lead arranged radially outside of the insulation system. However, the submarine power cable may comprise a metallic sheath of copper or aluminum e.g. to fulfil the requirement for earthing. Instead of a metallic sheath, the submarine power cable may comprise a set of metal wires and/or a copper tape arranged radially outside of the insulation system.

According to one embodiment, the submarine power cable is a lead-free power cable. According to one embodiment, the water-barrier layer is lead-free. According to one embodiment, the water-barrier layer is non-metallic.

According to one embodiment, the submarine power cable is a HVDC power cable or a HVAC power cable. The submarine power cable may be a high voltage power cable, for example for voltages higher than 72 kV. According to one example, the submarine power cable is a high voltage power cable, or an ultra-high voltage cable, for example for voltages higher than 450 kV, or higher than 550 kV, or higher than 800 kV.

According to one embodiment, the water barrier layer is at least 1 mm, e.g. between 1 mm and 30 mm, or between 5 mm and 30 mm thick. According to one embodiment, the water barrier layer is between 3 mm and 15 mm, such as between 5 mm and 10 mm thick. That is, the water barrier layer may have an extension in the radial direction of between 1 mm and 30 mm. According to one embodiment, the water barrier layer is between 2.5 mm and 4 mm, or between 5 mm and 8 mm.

According to one embodiment, the insulation system is more than 8 mm thick. For example, the insulation system is 8-45 mm thick, such as e.g. 8.3-38 mm thick, or 8.8-40.5 mm thick. For example, the first semiconducting layer (or semiconducting conductor shield) is 0.3-3 mm thick and the insulation layer is 8-35 mm thick. According to one embodiment, the second semiconducting layer (or semiconducting insulation shield) is 0.5-2.5 mm thick.

According to one embodiment, the submarine power cable comprises a conductor tape forming the interface between conductor and the first semiconducting layer (or insulation system). The conductor tape may e.g. be 0.1-0.2 mm thick.

Any one of, or all of, the layers in the insulation system, the water barrier layer, the second semiconductive layer and/or the polymeric jacket may be extruded layers. According to one embodiment, any one of, or all of, the layers in the insulation system comprises a thermosetting polymer such as crosslinked polyethylene, XLPE, crosslinked ethylene propylene diene monomer rubber (EPDM), or crosslinked ethylene propylene rubber (EPR). According to one embodiment, any one of, or all of, the layers in the insulation system is thermoplastic, i.e. is formed of a thermoplastic composition. The first semiconducting layer typically comprises an electrically conductive compound, such as e.g. carbon black.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a radial cross section of a submarine power cable of an example embodiment;
Fig. 2 schematically shows a radial cross section of a submarine power cable of another example embodiment; and
Fig. 3 schematically shows a radial cross section of a submarine power cable of yet another example embodiment.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

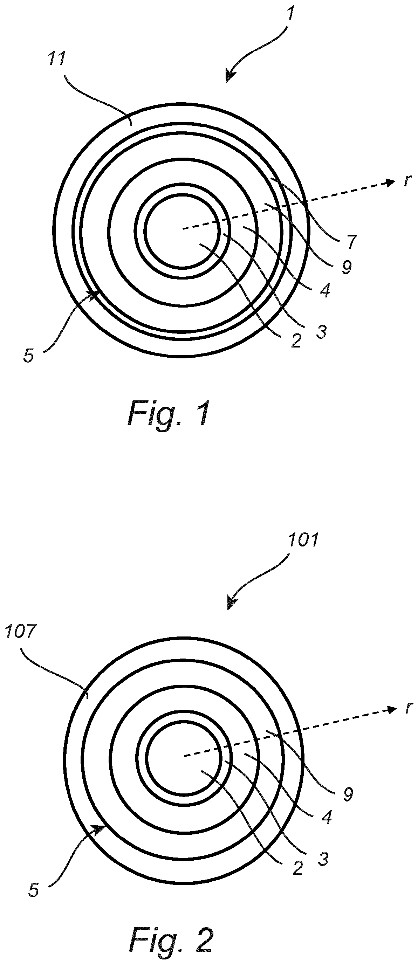

Figs. 1, 2 and 3 show examples of different submarine power cables 1, 101, 201. The submarine power cables in these examples are single power core power cables. However, it should be mentioned that the submarine power cable could comprise several identical power cores to form a multi-core power cable, such as three-phase power cable.

In Fig. 1, a radial cross section of a first embodiment of a submarine power cable 1 is shown. The radial cross section is a cross section in the radial direction r of the submarine power cable 1, i.e. perpendicular to a central longitudinal axis (extending into the paper). The submarine power cable 1 may e.g. be defined by cylindrical coordinates (by a radial distance r, azimuth φ which is the angle along the circumferential direction, and an axial coordinated along the longitudinal axis).

The submarine power cable 1 comprises a conductor 2. The conductor 2 may for example be stranded, segmental of Milliken type, solid, or a profile wire conductor. The conductor 2 may for example comprise copper or aluminum.

The submarine power cable 1 further comprises an insulation system 5 provided around, and covering, the conductor 2.

The insulation system 5 in the embodiment of Fig. 1 comprises a first semiconducting layer 3 provided around the conductor 2, an insulation layer 4 provided around the first semiconducting layer 3, and a second semiconducting layer 9 provided around the insulation layer 4.

The insulation system 5 may be extruded and comprise a thermosetting or thermoplastic polymer material. In case of extrusion, the polymeric material may for example be crosslinked polyethylene (XLPE), polypropylene (PP), EPDM rubber, or EPR rubber.

Thus, in the embodiment of Fig. 1, the second semiconducting layer 9 is arranged to be in direct contact with, and radially outside of, the insulation layer 4, and the insulation layer 4 is arranged to be in direct contact with, and radially outside of the first semiconducting layer 3. Thus, the first semiconducting layer 3 may form a semiconducting conductor shield and be referred to as an inner semiconducting layer. The second semiconducting layer 9 may form an insulation screen and be referred to as an outer semiconducting layer.

The submarine power cable 1 further comprises a water barrier layer 7 surrounding the insulation system 5. Thus, in the embodiment of Fig. 1, the water barrier layer 7 is in direct contact with the insulation system 5, as it is arranged in direct contact with, and radially outside of, the second semiconducting layer 9. Hereby, the water barrier layer 7 can prevent, or at least greatly reduce, water penetrating into the insulation system 5 from the outside.

Typically, the water barrier layer 7 has a water permeability of below 0.05 g / (m²*24 h). Hereby, the amount of water penetrating into the insulation system 5 from the outside can be kept low.

The submarine power cable 1 may furthermore comprise a polymeric jacket 11 provided around the insulation system 5. In the embodiment of Fig. 1, the polymeric jacket is arranged in direct contact with, and radially outside of, the water barrier layer 7. Thus, the water barrier layer 7 is arranged in between the insulation system 5 and the polymeric jacket 11.

The polymeric jacket 11 may e.g. comprise a polymeric material that is extruded around the water barrier layer 7. The polymeric jacket 11 of the embodiment of Fig. 1 may be wholly or partly water permeable.

Turning to Fig. 2 showing a radial cross section of a second embodiment of a submarine power cable 101. Correspondingly to Fig. 1, the radial cross section is a cross section in the radial direction r of the submarine power cable 101, i.e. perpendicular to a central longitudinal axis.

The submarine power cable 101 comprises a corresponding structure to the submarine power cable 1 of Fig. 1 with the difference that the water barrier layer and the polymeric jacket are combined into a single layer 107. That is, the polymeric jacket may form the water barrier layer 107 and be obtained from the previously described composition.

Thus, the submarine power cable 101 comprises a conductor 2 and an insulation system 5 provided around, and covering, the conductor 2, wherein the insulation system 5 comprises a first semiconducting layer 3 provided around the conductor 2, an insulation layer 4 provided around the first semiconducting layer 3, and a second semiconducting layer 9 provided around the insulation layer 4. The conductor 2 and the insulation system 5 may be the same as those described with reference to the embodiment of Fig. 1.

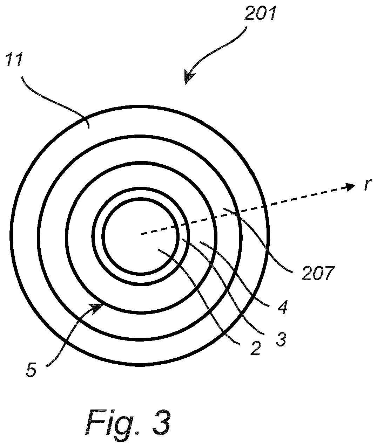

Turning to Fig. 3 showing a radial cross section of a third embodiment of a submarine power cable 201. Correspondingly to Fig. 1, the radial cross section is a cross section in the radial direction r of the submarine power cable 201, i.e. perpendicular to a central longitudinal axis.

The submarine power cable 101 comprises a corresponding structure to the submarine power cable 1 of Fig. 1 with the difference that the water barrier layer and the second semiconducting layer are combined into a single layer 207. That is, the second semiconducting layer may form the water barrier layer 207 and be obtained from the previously described composition.

Thus, the submarine power cable 201 comprises a conductor 2 and an insulation system 5 provided around, and covering, the conductor 2, wherein the insulation system 5 comprises a first semiconducting layer 3 provided around the conductor 2 and an insulation layer 4 provided around the first semiconducting layer 3. The second semiconducting layer is provided around the insulation layer 4, and as mentioned above, forms the water barrier layer 207. The conductor 2, the first semiconducting layer 3 and the insulation layer 4 may be the same as those described with reference to the embodiment of Fig. 1. Thus, in the embodiment of Fig. 2, the second semiconducting layer is not forming part of the insulation system 5, but is forming the water barrier layer 207 arranged in contact with, and radially outside of, the insulation system 5.

As also seen in Fig. 3, the submarine power cable 201 may comprise a polymeric jacket 11 provided around the insulation system 5. In the embodiment of Fig. 1, the polymeric jacket is arranged in direct contact with, and radially outside of, the water barrier layer 207. Thus, the water barrier layer 207 is arranged in between the insulation system 5 and the polymeric jacket 11. The polymeric jacket 11 maybe the same as that described with reference to the embodiment of Fig. 1.

The water barrier layer 7, 107, 207 in any one of the previously mentioned embodiments is obtained from a composition comprising a base polymer in an amount of at least 50 wt% and an additive being graphene, graphene or graphite nanoplatelets, graphene oxide, reduced graphene oxide and/or graphite in an amount of between 0.05 wt% and 10 wt%, preferably between 0.25 wt% and 6 wt %, more preferably between 0.5 wt% and 2 wt%, based on the weight of the composition. Hereby, an advantageous water barrier layer 7, 107, 207 is achieved. The additive may e.g. be mixed with the base polymer in the extruder.

The base polymer of the composition may be thermoplastic polymer. As a further example, the base polymer of the composition may be HDPE, MDPE, LDPE, LLDPE or PP, or a mixture thereof. Additionally or alternatively, the base polymer of the composition is an engineered thermoplastics such as e.g. PVdC, PCTFE, LCP.

The submarine power cable 1, 101, 201 may be a HVDC power cable or a HVAC power cable, for example for voltages higher than 450 kV, or higher than 550 kV, or higher than 800 kV.

### EXAMPLES

Four inventive examples (IE 1-4) and two comparative examples (CE 1-2) of water barrier layers were prepared. The inventive examples was prepared by mixing a pre-dispersed graphene master batch (AROS MB^{™} HDPE - EX) with HDPE pellets (Borstar HE6063), using a laboratory micro-extruder at 180 °C, 50 rpm, and approximately 4 min compounding time. The graphene content was varied between 0.5 wt% and 10 wt%. After compounding, the resulting composition was hot-pressed at 210 °C for 10 min into 0.3 mm thick layers by stepwise increasing pressure from 20 bar to 380 bar.

For comparative examples, a HDPE-based water barrier layer without any graphene (CE 1), and a HDPE-based water barrier layer with 2.5 wt% carbon black (CE 2) were prepared. For CE 1, the same HDPE pellets as for the inventive examples were used (i.e. Borstar HE6063) and for CE 2, HDPE pellets comprising carbon black was used (Borstar HE6062).

The water vapor transmission rate (WVTR) was measured according to ISO 15106-1 at 40°C and 100% relative humidity (RH).

The impact of graphene on the WVTR for the different water barrier layers is shown in Table 1. Each one of the comparative examples contained 100 wt% HDPE-pellets (i.e. 100 wt% of Borstar HE6063 for CE 1 and 100 wt% of Borstar HE6062 for CE2), and for the inventive examples the HDPE content (wt%) reaches from 90 (IE 4) to 94 (IE 3) to 98.9 (IE 2) to 99.5 (IE 1).

Comparative example 1 (CE 1) exhibits a WVTR of 0.516 g / ( m²*day) at 40 °C. By incorporating 2.5 wt% carbon black, as shown for comparative example 2 (CE 2), the WVTR is improved. However, by incorporating graphene instead of carbon black, a significant improvement of the WVTR is achieved. Already at an amount of 0.5 wt% graphene, as for inventive example 1 (IE 1), the WVTR is improved compared to CE 2. Moreover the WVTR normalized to the thickness of the layer was investigated. For example, incorporation of 1.1 % graphene, as for inventive example 2 (IE 2), improves the performance by 42 % as compared to CE 1, while incorporation of 2.5 % of carbon back, as for CE 2, improves the performance by only 23 % as compared to CE 1.

**Table 1: WVTR results**

| **Example** | **Graphene content (wt %)** | **WVTR (g/(m²*day))** | **WVTR normalized to the thickness, ((g * mm)/(m²*day))** |
|---|---|---|---|
| **CE 1** | 0 | 0.516 | 0.155 |
| **CE 2** | 0 | 0.398 | 0.119 |
| **IE 1** | 0.5 | 0.375 | 0.112 |
| **IE 2** | 1.1 | 0.300 | 0.090 |
| **IE 3** | 6 | 0.207 | 0.062 |
| **IE 4** | 10 | 0.159 | 0.048 |

The inventive concept has mainly been described above with reference to a few examples. However, as is readily appreciated by a person skilled in the art, other embodiments than the ones disclosed above are equally possible within the scope of the inventive concept, as defined by the appended claims. For example, in case the submarine power cable comprises several identical power cores to form a multi-core power cable, such as three-phase power cable, each power core may correspond to that described with reference to the submarine power cables 1, 107, 201 described in Figs. 1-3. Thus, each power core may at least comprise a conductor 3, an insulation system 5 and a water barrier layer 7, 107, 207 as previously described. The power cores may be stranded and surrounded by a polymeric jacket.

## Claims

1. A submarine power cable (1, 101, 201) comprising:
a conductor (2);
- an insulation system (5) including at least a first semiconducting layer (3) provided around the conductor (2), and an insulation layer (4) provided around the first semiconducting layer (3);
- a water barrier layer (7, 107, 207) surrounding the insulation system (5);
wherein the water barrier layer (7, 107, 207) is obtained from a composition comprising a base polymer in an amount of at least 50 wt% and an additive being graphene, graphene or graphite nanoplatelets, graphene oxide, reduced graphene oxide and/or graphite in an amount of between 0.05 wt% and 10 wt%, preferably between 0.25 wt% and 6 wt %, more preferably between 0.5 wt% and 2 wt%, based on the weight of the composition.

2. The submarine power cable (1,101, 201) according to claim 1, wherein the water barrier layer (7, 107, 207) is in direct contact with the insulation system (5).

3. The submarine power cable (1, 101, 201) according to any one of claims 1-2, wherein the water barrier layer (7, 107, 207) has a water permeability of below 0.05 g / (m²*24 h).

4. The submarine power cable (1, 101, 201) according to any one of the preceding claims, wherein the composition of the water barrier layer (7, 107, 207) comprises at least one of the following additional components: an antioxidant, an UV stabilizer, a plasticizer, carbon black, a filler material, slip additives, a pigment.

5. The submarine power cable (1, 101, 201) according to any one of the preceding claims, wherein the base polymer of the composition of the water barrier layer (7, 107, 207) is a thermoplastic polymer.

6. The submarine power cable (1, 101, 201) according to any one of claims 1-4, wherein the base polymer of the composition of the water barrier layer (7, 107, 207) is HDPE, MDPE, LDPE, LLDPE or PP.

7. The submarine power cable (1, 101, 201) according to any one of the preceding claims, wherein the additive of the composition is in the form of composites or nanocomposites and/or particles or nanoparticles.

8. The submarine power cable (1, 101, 201) according to any one of the preceding claims, further comprising a polymeric jacket (11) provided around the insulation system (5).

9. The submarine power cable (1, 101) according to claim 8, wherein the water barrier layer (7, 207) is arranged in between the insulation system (5) and the polymeric jacket (11), or wherein the polymeric jacket forms the water barrier layer (107).

10. The submarine power cable (1, 101, 201) according to any one of the preceding claims, further comprising a second semiconducting layer (9).

11. The submarine power cable (1, 101) according to claim 10, wherein the second semiconducting layer (9) is comprised in the insulation system (5).

12. The submarine power cable (201) according to claim 10, wherein the second semiconducting layer forms the water barrier layer (207).

13. The submarine power cable (1, 101, 201) according to any one of the preceding claims, wherein the power cable does not comprise a metallic sheath of lead arranged radially outside of the insulation system (5).

14. The submarine power cable (1, 101, 201) according to any one of the preceding claims, being a lead-free power cable.

15. The submarine power cable (1, 101, 201) according to any one of the preceding claims, being a HVDC power cable or a HVAC power cable.
